(19) Europäisches Patentamt
European Patent Office
Office européen des brevets

(11) **EP 4 243 258 B1**

(12) **EUROPEAN PATENT SPECIFICATION**

(45) Date of publication and mention
of the grant of the patent:
**26.11.2025 Bulletin 2025/48**

(21) Application number: **21906131.4**

(22) Date of filing: **15.10.2021**

(51) International Patent Classification (IPC):
*H02K 35/00* (2006.01)  *H02N 1/08* (2006.01)

(52) Cooperative Patent Classification (CPC):
**H02K 35/00; H02N 1/08**

(86) International application number:
**PCT/JP2021/038217**

(87) International publication number:
**WO 2022/130767 (23.06.2022 Gazette 2022/25)**

(54) **VIBRATION-DRIVEN ENERGY HARVESTING DEVICE**

VIBRATIONSGETRIEBENES ENERGIEGEWINNUNGSGERÄT

DISPOSITIF DE RÉCUPÉRATION D'ÉNERGIE PAR VIBRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2020 JP 2020210828**

(43) Date of publication of application:
**13.09.2023 Bulletin 2023/37**

(73) Proprietor: **Saginomiya Seisakusho, Inc.
Tokyo 165-0033 (JP)**

(72) Inventors:
• **MITSUYA, Hiroyuki**
**Sayama-shi, Saitama 350-1395 (JP)**
• **ASHIZAWA, Hisayuki**
**Sayama-shi, Saitama 350-1395 (JP)**

(74) Representative: **Bandpay & Greuter
11 rue Christophe Colomb
75008 Paris (FR)**

(56) References cited:
WO-A1-2016/096492    JP-A- 2018 088 778
JP-A- 2018 157 724    JP-A- 2019 213 296

## Description

### Technical Field

The present invention relates to a vibration-driven energy harvesting device.

### Background Art

There has been known a vibration-driven energy harvesting device in which the power generation efficiency is enhanced by controlling an amplitude of a vibrating electrode in a vibration-driven energy harvesting element (see PTL 1). There has also been known a triboelectric power generator system which uses a power converter to provide a controllable impedance between a triboelectric power generator and a load, depending on the triboelectric generator output (see PTL 2).

### Citation List

### Patent Literature

PTL 1: Japanese Patent Laid-Open No. 2019-213296
PTL2 : International Patent Application WO 2016/096492 A1

### Summary of Invention

### Technical Problem

According to a vibration-driven energy harvesting device disclosed in PTL 1, there is a problem that the efficiency of the outputted power is low in some cases depending on a change in vibration of an electrode in the vibration-driven energy harvesting element.

### Solution to Problem

According to the present invention, a vibration-driven energy harvesting device includes the features of claim 1.

### Advantageous Effects of Invention

According to the present invention, it is possible to enhance the power generation efficiency of a vibration-driven energy harvesting device even in a case where vibration is changed.

### Brief Description of Drawings

[Fig. 1] Fig. 1 is a diagram illustrating an example of a configuration of a vibration-driven energy harvesting device connected to a load resistor as a power feeding target;
[Fig. 2] Fig. 2 is a diagram exemplifying a relationship between a power value of power generated by a vibration-driven energy harvesting element and a vibration acceleration in a vibration generation device as a vibration generation source;
[Fig. 3] Fig. 3 is a diagram illustrating an example of processing of adjusting an input impedance of an output unit of the vibration-driven energy harvesting device that is performed by an adjustment unit of the vibration-driven energy harvesting device;
[Fig. 4A] Fig. 4A is a diagram describing an example of the processing of adjusting the input impedance of the output unit of the vibration-driven energy harvesting device that is performed by the adjustment unit of the vibration-driven energy harvesting device;
[Fig. 4B] Fig. 4B is another diagram describing an example of the processing of adjusting the input impedance of the output unit of the vibration-driven energy harvesting device that is performed by the adjustment unit of the vibration-driven energy harvesting device;
[Fig. 4C] Fig. 4C is another diagram describing an example of the processing of adjusting the input impedance of the output unit of the vibration-driven energy harvesting device that is performed by the adjustment unit of the vibration-driven energy harvesting device;
[Fig. 5] Fig. 5 is a diagram illustrating a modification of a configuration of the vibration-driven energy harvesting device connected to the load resistor as the power feeding target;
[Fig. 6A] Fig. 6A is a diagram describing an example of the processing of adjusting the input impedance of the output unit of the vibration-driven energy harvesting device that is performed by the adjustment unit of the vibration-driven energy harvesting device according to the modification;
[Fig. 6B] Fig. 6B is another diagram describing an example of the processing of adjusting the input impedance of the output unit of the vibration-driven energy harvesting device that is performed by the adjustment unit of the vibration-driven energy harvesting device according to the modification; and
[Fig. 6C] Fig. 6C is another diagram describing an example of the processing of adjusting the input impedance of the output unit of the vibration-driven energy harvesting device that is performed by the adjustment unit of the vibration-driven energy harvesting device according to the modification.

### Description of Embodiments

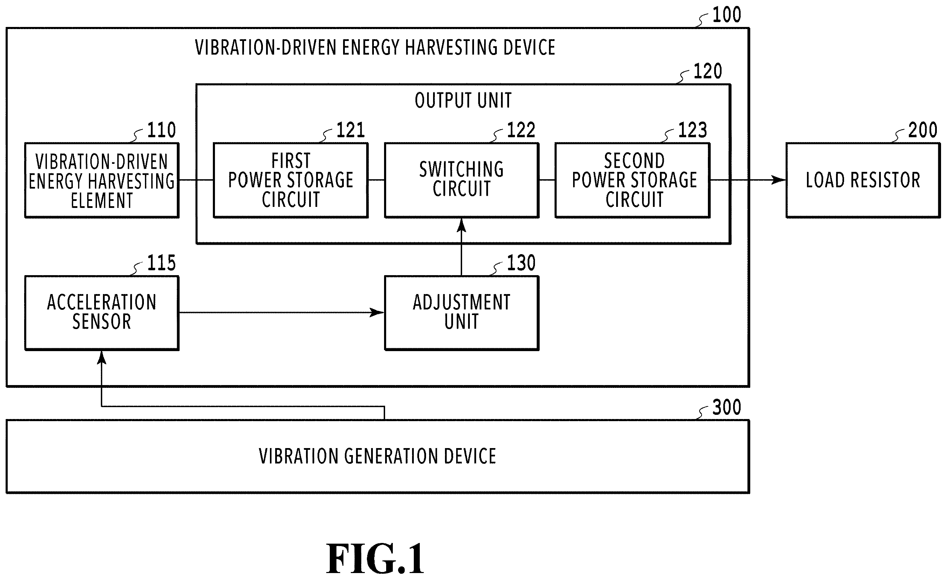

A vibration-driven energy harvesting device 100 in an embodiment of the present invention is described below by using Figs. 1 to 3. Fig. 1 is a diagram illustrating an example of a configuration of the vibration-driven energy harvesting device 100 connected to a load resistor 200 as a power feeding target. The load resistor 200 can be, for example, a driving power source for driving of detection by a sensor forming the IOT and communication of a detection signal thereof; however, as a matter of course, a mode of the load resistor is not limited thereto. The vibration-driven energy harvesting device 100 includes a vibration-driven energy harvesting element 110 that generates power in accordance with vibration of an electrode generated by vibration of a vibration generation device, an acceleration sensor 115 that detects a vibration acceleration in the electrode, an output unit 120 that supplies the power generated by the vibration-driven energy harvesting element 110 to the load resistor 200, and an adjustment unit 130. In the present embodiment, the vibration-driven energy harvesting device 100 is disposed in a vibration generation device 300 that generates the vibration in the electrode of the vibration-driven energy harvesting element 110. The vibration-driven energy harvesting element 110 includes a fixed electrode and a movable electrode, and a vibration acceleration in the fixed electrode is a value in accordance with a vibration acceleration in the vibration generation device 300 as a vibration generation source.

For the sake of simple description, in the present embodiment, the vibration acceleration in the fixed electrode of the vibration-driven energy harvesting element 110 is a value equal to the vibration acceleration in the vibration generation device 300. In Fig. 1, an arrow extending from the vibration-driven energy harvesting element 110 to the load resistor 200 through the output unit 120 indicates a power supply direction. An arrow extending from each of the acceleration sensor 115 and the adjustment unit 130 indicates a direction of control to adjust an input impedance of the output unit 120 described later.

The acceleration sensor 115 is, for example, formed by an electrostatic capacity detection method and is also disposed in the vibration-driven energy harvesting element 110 to detect the vibration acceleration in the vibration generation device 300. A signal corresponding to the detected vibration acceleration is transferred to the adjustment unit 130. The signal transferred from the acceleration sensor 115 to the adjustment unit 130 represents the vibration acceleration in the vibration generation device 300 that is detected by the acceleration sensor 115. Such a signal can be said as a signal corresponding to the vibration acceleration in the electrode of the vibration-driven energy harvesting element 110. Accordingly, the signal transferred from the acceleration sensor 115 to the adjustment unit 130 represents a detection value related to the vibration acceleration in the electrode of the vibration-driven energy harvesting element 110. The adjustment unit 130 includes, for example, a comparator that determines whether the vibration acceleration in the vibration generation device 300 is greater than a predetermined threshold by using the signal transferred from the acceleration sensor 115 and a control circuit that controls a switching operation of a switching circuit 122 described below, and adjusts the input impedance of the output unit 120 in accordance with a determination result of the comparator.

The output unit 120 includes a first power storage circuit 121, the switching circuit 122, and a second power storage circuit 123. The first power storage circuit 121 includes, for example, a rectifier and a capacitor and converts alternating-current power outputted from the vibration-driven energy harvesting element 110 into direct-current power to store. The switching circuit 122 includes, for example, a transistor and performs the switching operation to start or stop power transmission from the first power storage circuit 121 to the second power storage circuit 123. The second power storage circuit 123 includes, for example, an inductor and a capacitor and converts a voltage of direct-current power transmitted from the first power storage circuit 121 to the switching circuit 122 to store.

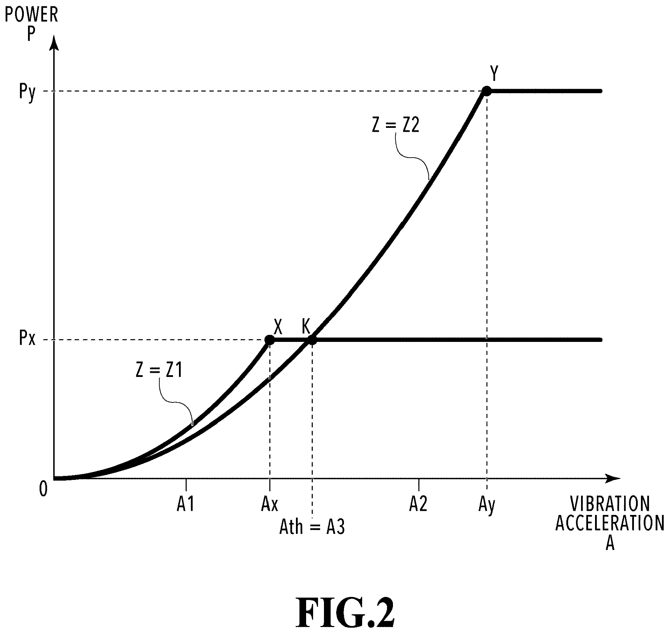

Fig. 2 is a diagram exemplifying a relationship between power P, which is power generated by the vibration-driven energy harvesting element 110, and a vibration acceleration A, which is detected by the acceleration sensor based on the vibration of the vibration generation device 300 as the vibration generation source, and illustrates the above-described relationship for each of different input impedances of the output unit 120. A vertical axis in Fig. 2 indicates a value of the power P, and a horizontal axis indicates a value of the vibration acceleration. The input impedance herein is a ratio between an input voltage inputted to the output unit 120 and an input current flowing therein, and in other words, the input impedance is an impedance of an input section of the output unit 120 seen from the vibration-driven energy harvesting element 110. The value of the input impedance is determined by a power storage amount stored in the first power storage circuit 121, and the power storage amount is changed by switching of the switching circuit 122. In a case where an input impedance Z of the output unit 120 is a first impedance value Z1, a vibration acceleration A in the vibration generation device 300 is increased from 0 and reaches Ax. At the time, power Pz1 generated by the vibration-driven energy harvesting element 110 is increased in proportion to the square of the vibration acceleration A. In other words, the power P is expressed as an expression (1) by using a proportionality coefficient C1.

$$\mathrm{Pz1} = \mathrm{C1} \times \mathrm{A}^2 \ (0 \le \mathrm{A} \le \mathrm{Ax}) \ ...(1)$$

In a case of the input impedance Z of the output unit 120 = Z1, based on the expression (1), the power Pz1 generated by the vibration-driven energy harvesting element 110 = Px, where the vibration acceleration A in the vibration generation device 300 = Ax. Fig. 2 illustrates an inflection point X (Ax, Px) of the power Pz1. The power Pz1 indicates an increase in proportion to the square of the vibration acceleration A in the vibration acceleration A ≤ Ax until reaching the vibration acceleration A > Ax. Then, once reaching the vibration acceleration A > Ax, the power Pz1 substantially remains at the same level or indicates a gradual increase or a gradual decrease from the power value Px at the inflection point X.

In a case where the input impedance Z of the output unit 120 is a second impedance value Z2 different from the first impedance value Z1, the vibration acceleration A in the vibration generation device 300 is increased from 0 and reaches Ay. At the time, power Pz2 generated by the vibration-driven energy harvesting element 110 is increased in proportion to the square of the vibration acceleration A. In other words, the power Pz2 is expressed as an expression (2) by using a proportionality coefficient C2.

$$ \mathrm{Pz2} = \mathrm{C2} \times \mathrm{A}^2 \ (0 \le \mathrm{A} \le \mathrm{Ay}) \ ...(2) $$

In a case of the input impedance Z of the output unit 120 = Z2, based on the expression (2), the power Pz2 generated by the vibration-driven energy harvesting element 110 = Py, where the vibration acceleration A in the vibration generation device 300 = Ay, and it is possible to express an inflection point Y (Ay, Py) of the power Pz2 in Fig. 2. Once reaching the vibration acceleration A > Ay, the power Pz2 is changed from the tendency indicating an increase in proportion to the square of the vibration acceleration A in the vibration acceleration A ≤ Ay to the tendency indicating substantial remaining at the same level or a gradual increase or a gradual decrease from the power value Py at the inflection point Y.

In a case where the second impedance value Z2 of the input impedance Z of the output unit 120 is greater than the first impedance value Z1, as illustrated in Fig. 2, the proportionality coefficient C2 used in the expression (2) is smaller than the proportionality coefficient C1 used in the expression (1), and also the power value Py at the inflection point Y is greater than the power value Px at the inflection point X.

As illustrated in Fig. 2, in a case where the vibration acceleration A in the vibration generation device 300 is small, if the input impedance Z of the output unit 120 is the first impedance value, the power P greater than that in a case where the input impedance Z of the output unit 120 is the second impedance value is obtained. In a case where the vibration acceleration A in the vibration generation device 300 is great, if the input impedance Z of the output unit 120 is the second impedance value, the power P greater than that in a case where the input impedance Z of the output unit 120 is the first impedance value.

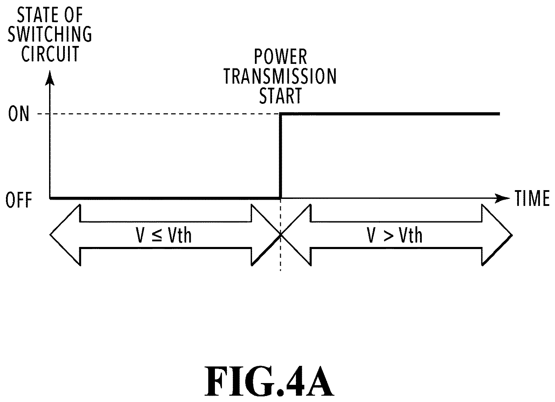

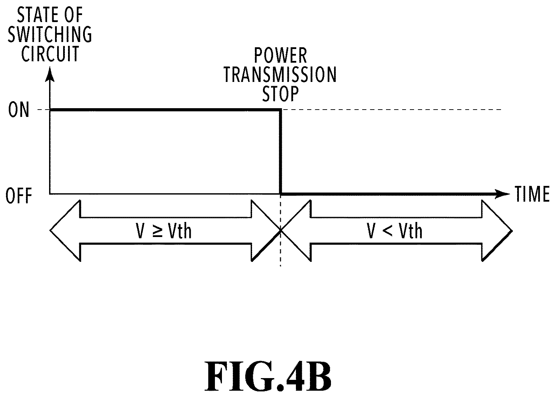

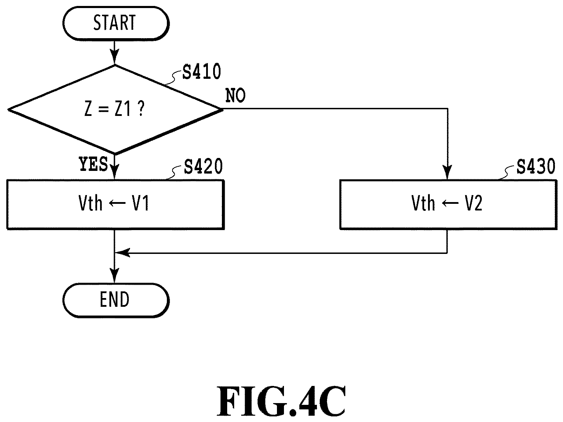

Focusing on this point, in the present embodiment, the adjustment unit 130 adjusts the input impedance Z of the output unit 120 as follows, as the details thereof described below in Fig. 4. In a case where the vibration acceleration A in the vibration generation device 300 is the first acceleration value A1 smaller than a predetermined threshold Ath (0 ≤ A1 < Ath), the adjustment unit 130 adjusts the input impedance Z of the output unit 120 to the first impedance value Z1. In a case where the vibration acceleration A in the electrode of the vibration-driven energy harvesting element 110 is the second acceleration value A2 greater than the predetermined threshold Ath (A2 > Ath), the adjustment unit 130 adjusts the input impedance Z of the output unit 120 to the second impedance value Z2. Note that, in the present embodiment, as illustrated in Fig. 2, the predetermined threshold Ath is equal to a third acceleration value A3, which is a value of the vibration acceleration A at an intersection point K between a graph of the power P with respect to the vibration acceleration A in a case of the input impedance Z = Z1 and a graph of the power P with respect to the vibration acceleration A in a case of the input impedance Z = Z2. The power P in a case where the vibration acceleration A is the third acceleration value A3 while the input impedance Z is the first impedance value Z1 is equal to the power P in a case where the vibration acceleration A is the third acceleration value A3 while the input impedance Z is the second impedance value Z2. The power P in this case is the power value Px or a value near the power value Px.

In other words, in a case where the vibration acceleration A in the vibration generation device 300 is changed from the first acceleration value A1 smaller than the predetermined threshold Ath to the second acceleration value A2 greater than the predetermined threshold Ath = A3, the adjustment unit 130 changes the input impedance Z of the output unit 120 from the first impedance value Z1 to the second impedance value Z2. Thus, in a case where the vibration acceleration A becomes greater than the predetermined threshold Ath, the power P greater than that in a case of presuming not changing the input impedance Z is obtained. On the other hand, in a case where the vibration acceleration A in the vibration generation device 300 is changed from the second acceleration value A2 greater than the predetermined threshold Ath to the first acceleration value A1 smaller than the predetermined threshold Ath = A3, the adjustment unit 130 changes the input impedance Z of the output unit 120 from the second impedance value Z2 to the first impedance value Z1. Thus, in a case where the vibration acceleration A becomes smaller than the predetermined threshold Ath, the power P greater than a case of presuming not changing the input impedance Z is obtained.

The predetermined threshold Ath is set in advance to the comparator included in the adjustment unit 130. As the predetermined threshold Ath, it is not limited to the third acceleration value A3, and another value near the third acceleration value A3 may be set, or multiple values taking into consideration hysteresis may be used.

Note that, the change in the value of the input impedance of the output unit 120 is implemented by changing the conditions for the switching circuit 122 to perform the switching operation of the power transmission based on a power storage voltage of the first power storage circuit 121. Such an operation is described later by using Figs. 4A, 4B, and 4C. Note that, in the above-described example, the change in the power-acceleration relationship between the two impedances Z1 and Z2 in a case where the threshold Ath is the acceleration A3 is described; however, depending on the corresponding vibration generation source, higher power for a wide range of vibration acceleration may be generated in some cases. In such a case, an acceleration Ak (> A3) may be set as a k-th threshold, the power-acceleration relationship between two impedances Zm and Zn may be changed, and higher power may be generated.

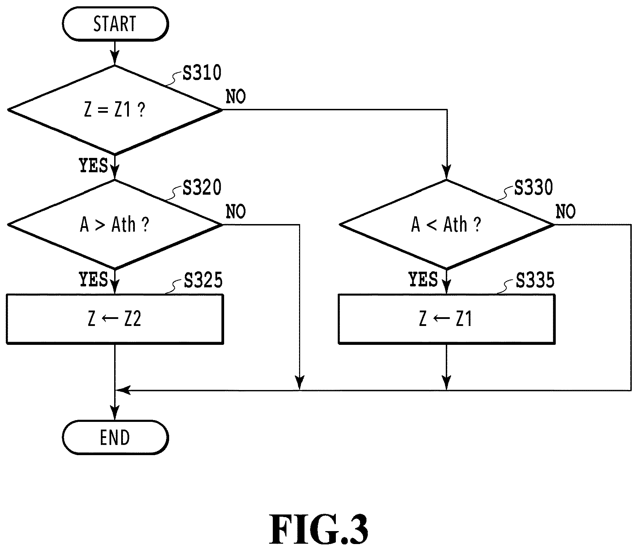

Fig. 3 is a diagram illustrating an example of processing of adjusting the input impedance of the output unit 120 of the vibration-driven energy harvesting device 100 that is performed by the adjustment unit 130 of the vibration-driven energy harvesting device 100. This input impedance adjustment processing is, for example, executed repeatedly in accordance with a range of the detected vibration acceleration A while the vibration-driven energy harvesting device 100 supplies the power to the load resistor 200.

In step S310, the adjustment unit 130 determines whether the input impedance Z of the output unit 120 is the first impedance value Z1. If affirmative determination is obtained, the input impedance Z of the output unit 120 is the first impedance value Z1, and the processing proceeds to step S320 corresponding to the first impedance value Z1. If denial determination is obtained, the input impedance Z of the output unit 120 is the second impedance value Z2 different from the first impedance value Z1, and the processing proceeds to step S330 corresponding to the second impedance value Z2.

In step S320, the adjustment unit 130 determines whether the vibration acceleration A in the vibration generation device 300 is greater than the predetermined threshold Ath. As described above, for example, the third acceleration value A3 is set in advance as the predetermined threshold Ath. If affirmative determination is obtained in step S320, in other words, if it is determined that the vibration acceleration A is greater than the predetermined threshold Ath, in step S325, the adjustment unit 130 adjusts the input impedance Z of the output unit 120 to change from the first impedance value Z1 to the second impedance value Z2. If denial determination is obtained in step S320, in other words, if it is determined that the vibration acceleration A is not greater than the predetermined threshold Ath, the adjustment unit 130 does not change the input impedance Z of the output unit 120.

In step S330, the adjustment unit 130 determines whether the vibration acceleration A in the vibration generation device 300 is smaller than the predetermined threshold Ath. As described above, for example, the third acceleration value A3 is set in advance as the predetermined threshold Ath. If affirmative determination is obtained in step S330, in other words, if it is determined that the vibration acceleration A is smaller than the predetermined threshold Ath, in step S335, the adjustment unit 130 adjusts the input impedance Z of the output unit 120 to change from the second impedance value Z2 to the first impedance value Z1. If denial determination is obtained in step S330, in other words, if it is determined that the vibration acceleration A is not smaller than the predetermined threshold Ath, the adjustment unit 130 does not change the input impedance Z of the output unit 120.

Figs. 4A to 4C are diagrams describing an example of the processing of adjusting the input impedance Z of the output unit 120 of the vibration-driven energy harvesting device 100 that is performed by the adjustment unit 130 of the vibration-driven energy harvesting device 100. In other words, although the adjustment unit 130 performs the processing of changing the input impedance Z in accordance with the vibration acceleration as described above in Figs. 2 and 3, this impedance change is performed by performing switching of the power transmission in accordance with a value of a voltage V of the direct-current power stored in the first power storage circuit 121. As described above, the adjustment unit 130 includes the control circuit that controls the switching operation of the switching circuit 122. As illustrated in Fig. 4A, once the voltage V of the direct-current power stored in the first power storage circuit 121 rises to a voltage value greater than the predetermined voltage value Vth (V > Vth), the switching circuit 122 performs the switching operation of the power transmission in accordance with the control by the adjustment unit 130. A state of the switching circuit 122 is changed from off to on, and the power transmission from the first power storage circuit 121 to the second power storage circuit 123 is started. As illustrated in Fig. 4B, once the voltage V of the direct-current power stored in the first power storage circuit 121 decreases to a voltage value smaller than the predetermined voltage value Vth (V < Vth), the switching circuit 122 performs the switching operation of the power transmission in accordance with the control by the adjustment unit 130. The state of the switching circuit 122 is changed from on to off, and the power transmission from the first power storage circuit 121 to the second power storage circuit 123 is stopped.

As described above, in a case of changing the input impedance Z, the adjustment unit 130 changes the conditions for the switching circuit 122 to perform the switching operation of the power transmission. In the present embodiment, the adjustment unit 130 changes the conditions for the switching circuit 122 to perform the switching operation of the power transmission by changing the above-described predetermined voltage value Vth. Fig. 4C is a diagram illustrating the adjustment processing of the input impedance Z of the output unit 120 by the adjustment unit 130 as described above.

The adjustment processing of the input impedance Z of the output unit 120 by the adjustment unit 130 illustrated in Fig. 4C is, for example, repeatedly executed while the vibration-driven energy harvesting device 100 supplies the power to the load resistor 200. In step S410, the adjustment unit 130 determines whether to adjust the input impedance Z of the output unit 120 to the first impedance value Z1. If affirmative determination is obtained, the processing proceeds to step S420, and if denial determination is obtained, the processing proceeds to step S430.

In step S420, the adjustment unit 130 sets the predetermined voltage value Vth to the first voltage value V1. In a case where the predetermined voltage value Vth = V1, the input impedance Z of the output unit 120 is the first impedance value Z1. Once step S420 is completed, the adjustment processing of the input impedance Z of the output unit 120 ends.

In step S430, the adjustment unit 130 sets the predetermined voltage value Vth to the second voltage value V2 greater than the first voltage value V1. In a case of the predetermined voltage value Vth = V2, the input impedance Z of the output unit 120 is the second impedance value Z2. Once step S430 is completed, the adjustment processing of the input impedance Z of the output unit 120 ends. As it can be seen from the above descriptions, a relationship between the procedure illustrated in Fig. 4(C) and the procedure illustrated in Fig. 3 is as follows. Steps S410 and S420 in Fig. 4(C) correspond to step S335 in Fig. 3, and steps S410 and S430 correspond to step S325 in Fig. 3.

According to the vibration-driven energy harvesting device 100 in the present embodiment, the following operations and effects are obtained.

(1) The vibration-driven energy harvesting device 100 includes a vibration-driven energy harvesting element 110 that generates power in accordance with vibration of an electrode, an output unit 120 that supplies the power generated by the vibration-driven energy harvesting element 110 to a load resistor 200 once being connected to the load resistor 200, and an adjustment unit 130. The adjustment unit 130 adjusts an input impedance Z of the output unit 120 in accordance with a signal transferred from an acceleration sensor 115. The signal transferred from the acceleration sensor 115 to the adjustment unit 130 is a signal representing a vibration acceleration A in the vibration generation device 300 that is detected by the acceleration sensor 115 and is, in other words, a signal corresponding to a vibration acceleration in the vibration of the electrode of the vibration-driven energy harvesting element 110. Accordingly, there is obtained an effect that it is possible to change power P supplied to the load resistor 200 by the output unit 120 of the vibration-driven energy harvesting device 100 in accordance with the vibration acceleration in the vibration of the electrode of the vibration-driven energy harvesting element 110 and it is possible to enhance the power generation efficiency of the vibration-driven energy harvesting device 100.

(2) In the vibration-driven energy harvesting device 100, the signal transferred from the acceleration sensor 115 to the adjustment unit 130 represents a detection value related to the vibration acceleration in the vibration of the electrode of the vibration-driven energy harvesting element 110 that is detected by the acceleration sensor 115. In the present embodiment, the detection value is a value of the vibration acceleration A in the vibration generation device 300. In a case where the vibration acceleration A is changed from the first acceleration value A1 smaller than the predetermined threshold Ath to the second acceleration value A2 greater than the predetermined threshold Ath, the adjustment unit 130 changes the input impedance Z of the output unit 120 from the first impedance value Z1 to the second impedance value Z2 greater than the first impedance value Z1. In a case where the vibration acceleration A is changed from the second acceleration value A2 to the first acceleration value A1, the input impedance Z is changed from the second impedance value Z2 to the first impedance value Z1. Accordingly, there is obtained an effect that it is possible to change the power P such that the power P supplied to the load resistor 200 by the output unit 120 of the vibration-driven energy harvesting device 100 is a greater power value in both the cases where the vibration acceleration A in the vibration generation device 300 is small and great.

(3) In the vibration-driven energy harvesting device 100, the acceleration sensor 115 is disposed in the vibration-driven energy harvesting element 110. Accordingly, there is obtained an effect that an accuracy of the vibration acceleration represented by the signal transferred from the acceleration sensor 115 to the adjustment unit 130 is high.

(4) In the vibration-driven energy harvesting device 100, the predetermined threshold Ath is equal to the third acceleration value A3 if the power P, which is supplied to the load resistor 200 by the output unit 120, in a case where the vibration acceleration A in the vibration of the electrode is the third acceleration value A3 while the input impedance Z of the output unit 120 is the first impedance value Z1 and the power P in a case where the vibration acceleration A is the third acceleration value A3 while the input impedance Z is the second impedance value Z2 are equal to each other. Accordingly, there is obtained an effect that the proportionally high power P can be supplied to the load resistor 200 by the output unit 120 in accordance with the vibration acceleration A in the vibration of the electrode.

(5) In the vibration-driven energy harvesting device 100, the output unit 120 includes a first power storage circuit 121 that converts alternating-current power outputted from the vibration-driven energy harvesting element 110 into direct-current power to store, a second power storage circuit 123 that converts a voltage of the direct-current power to store, and a switching circuit 122 that performs a switching operation to start or stop the power transmission from the first power storage circuit 121 to the second power storage circuit 123. The adjustment unit 130 adjusts the input impedance Z of the output unit 120 by changing conditions for performing the switching operation of the power transmission controlled by a control circuit included in the adjustment unit 130. There is obtained an effect that it is possible to adjust the input impedance Z of the output unit 120 with no need to add a special change to the circuit configuration of the conventional output unit 120.

(6) In the vibration-driven energy harvesting device 100, the switching circuit 122 performs the switching operation of the power transmission in a case where a voltage V of the direct-current power stored in the first power storage circuit 121 rises to a voltage value greater than the predetermined voltage value Vth or decreases to a voltage value smaller than the predetermined voltage value Vth. The control circuit included in the adjustment unit 130 can change the conditions for the switching circuit 122 to perform the switching operation of the power transmission by changing the predetermined voltage value Vth. In this case, there is obtained an effect that it is possible to form the control circuit with a relatively simple circuit.

The following modifications are also within the scope of the present invention, and it is possible to combine one or more of the modifications described below with the above-described embodiment.

(1) In an embodiment described above, the acceleration sensor 115 of the vibration-driven energy harvesting device 100 is formed by an electrostatic capacity detection method and is disposed in the vibration-driven energy harvesting element 110 included in the vibration-driven energy harvesting device 100. It is not limited to the electrostatic capacity detection method, and the acceleration sensor 115 may be formed by another method. Additionally, the acceleration sensor 115 is not necessarily disposed in the vibration-driven energy harvesting element 110. For example, the acceleration sensor 115 may be disposed in the vibration generation device 300 as the vibration generation source that generates vibration in the electrode of the vibration-driven energy harvesting element 110 outside the vibration-driven energy harvesting device 100. In the acceleration sensor 115, a signal representing the vibration acceleration A in the vibration generated by the vibration generation device 300 and acting on the vibration-driven energy harvesting element 110 may be used as a signal corresponding to the vibration acceleration in the electrode of the vibration-driven energy harvesting element 110 in both the cases of being disposed in the vibration-driven energy harvesting element 110 and being disposed in the vibration generation device 300.

The detection value detected by the acceleration sensor 115 represents the vibration acceleration A in the vibration generated by the vibration generation device 300, and since the vibration generated by the vibration generation device 300 is related to the vibration of the electrode of the vibration-driven energy harvesting element 110, the detection value is a value related to the vibration acceleration in the electrode of the vibration-driven energy harvesting element 110. Accordingly, as a signal corresponding to the vibration acceleration in the electrode of the vibration-driven energy harvesting element 110, a signal representing the vibration acceleration A in the vibration generated by the vibration generation device 300 that is detected by the acceleration sensor 115 is used.

(2) In an embodiment described above, the adjustment unit 130 of the vibration-driven energy harvesting device 100 adjusts the input impedance of the output unit 120 by using the signal representing the vibration acceleration A in the vibration generated by the vibration generation device 300 as the signal corresponding to the vibration acceleration in the electrode of the vibration-driven energy harvesting element 110. The adjustment unit 130 may adjust the input impedance Z of the output unit 120 in accordance with another signal obtained by the vibration generation device 300 as the vibration generation source that generates the vibration in the electrode of the vibration-driven energy harvesting element 110.

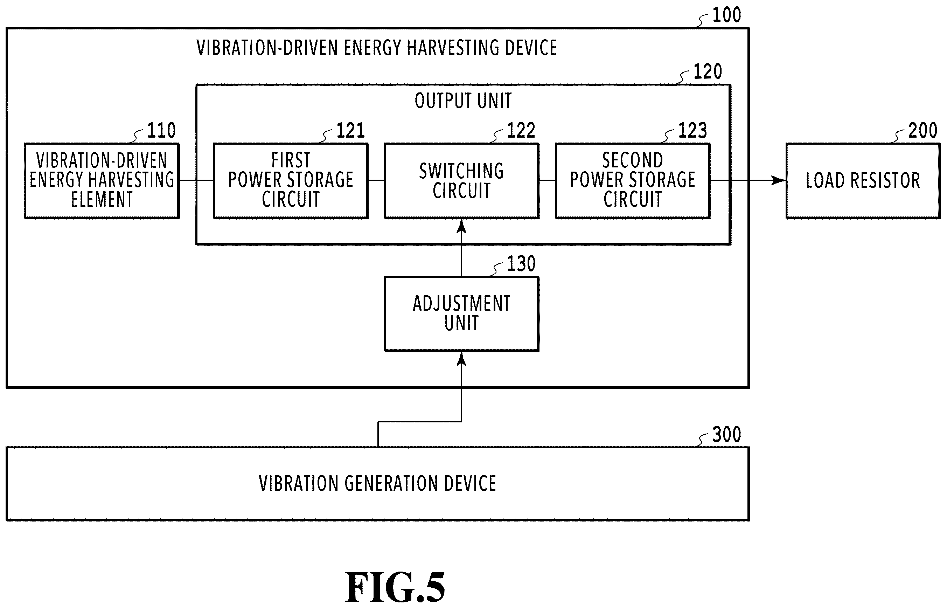

Fig. 5 is a diagram illustrating the modification (1) of the configuration of the vibration-driven energy harvesting device 100 connected to the load resistor 200 as the power feeding target. Unlike the example illustrated in Fig. 1, the adjustment unit 130 of the vibration-driven energy harvesting device 100 adjusts the input impedance Z of the output unit 120 in accordance with the signal obtained by the vibration generation device 300 instead of the signal transferred from the acceleration sensor 115. In an example illustrated in Fig. 5, the vibration generation device 300 includes, for example, a compressor. The signal obtained by the above-described vibration generation device 300 is a signal representing an output level of the vibration generation device 300. For example, the adjustment unit 130 of the vibration-driven energy harvesting device 100 can obtain the signal representing the output level of the vibration generation device 300 by referring to an operation state of a not-illustrated vibration switch that operates in accordance with the output level of the vibration generation device 300 or an operation state of a not-illustrated timer that starts or stops an operation of the vibration generation device 300. Since the vibration acceleration in the electrode of the vibration-driven energy harvesting element 110 depends on the output level of the vibration generation device 300, the signal representing the output level of the vibration generation device 300 is a signal corresponding to the vibration acceleration in the electrode. The higher the value of this output level, the greater the vibration acceleration.

For example, in a case where the output level of the vibration generation device 300 is changed from a LOW level to a HIGH level higher than the LOW level, the adjustment unit 130 of the vibration-driven energy harvesting device 100 changes the input impedance Z of the output unit 120 from the first impedance value Z1 to the second impedance value Z2 greater than the first impedance value Z1. In a case where the vibration generation device 300 output level is changed from the HIGH level to the LOW level, the adjustment unit 130 of the vibration-driven energy harvesting device 100 changes the input impedance Z of the output unit 120 from the second impedance value Z2 to the first impedance value Z1. Thus, it is possible to make a change in the input impedance in accordance with the above-described output level by setting a threshold of the vibration acceleration to the switching between "LOW" and "HIGH" of the output level.

The output level of the vibration generation device 300 may be detected based on a change in an operation state of the compressor included in the vibration generation device 300. For example, in a case where the compressor is activated, it is detected that the vibration generation device 300 output level is at the HIGH level, and in a case where the compressor is stopped, it is detected that the vibration generation device 300 output level is at the LOW level.

In the vibration-driven energy harvesting device 100 in the present modification, the signal used by the adjustment unit 130 at the time of adjusting the input impedance Z of the output unit 120 represents the output level of the vibration generation device 300 that generates the vibration in accordance with the vibration acceleration A in the electrode of the vibration-driven energy harvesting element 110. In a case where the output level of the vibration generation device 300 is changed from the LOW level to the HIGH level greater than the LOW level, the adjustment unit 130 changes the input impedance Z from the first impedance value Z1 to the second impedance value Z2 greater than the first impedance value Z1. In a case where the output level of the vibration generation device 300 is changed from the HIGH level to the LOW level, the adjustment unit 130 changes the input impedance Z from the second impedance value Z2 to the first impedance value Z1. Accordingly, there is obtained an effect that it is possible to downsize the vibration-driven energy harvesting device 100 with no need to provide the acceleration sensor 115 in the vibration-driven energy harvesting device 100 and also to reduce the power required to drive the acceleration sensor 115.

(3) In an embodiment described above, the two types of impedance values including the first impedance value Z1 and the second impedance value Z2 can be set to the input impedance Z of the output unit 120 of the vibration-driven energy harvesting device 100. However, multiple types of impedance values more than the two types may be set to the input impedance Z of the output unit 120. Those multiple types of impedance values may be continuously changeable set values.

(4) In an embodiment described above, the conditions for the switching circuit 122 to perform the switching operation of the power transmission included in the output unit 120 of the vibration-driven energy harvesting device 100 depends on the relationship between the voltage V of the direct-current power stored in the first power storage circuit 121 and the predetermined voltage value Vth, and the conditions for performing the switching operation of the power transmission is changed by changing the predetermined voltage value Vth. However, the conditions for performing the switching operation of the power transmission may be changed by repeatedly performing the switching operation of the power transmission periodically by the switching circuit 122 and changing a duty ratio based on time from start to stop of the power transmission and time from stop to start of the power transmission by the control circuit included in the adjustment unit 130.

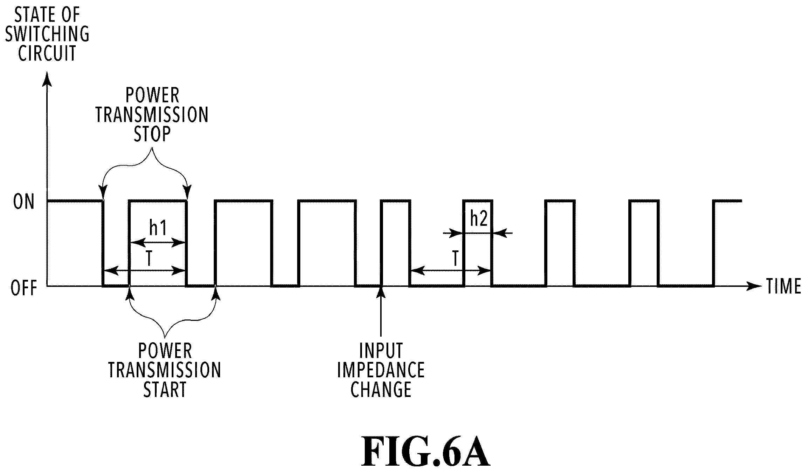

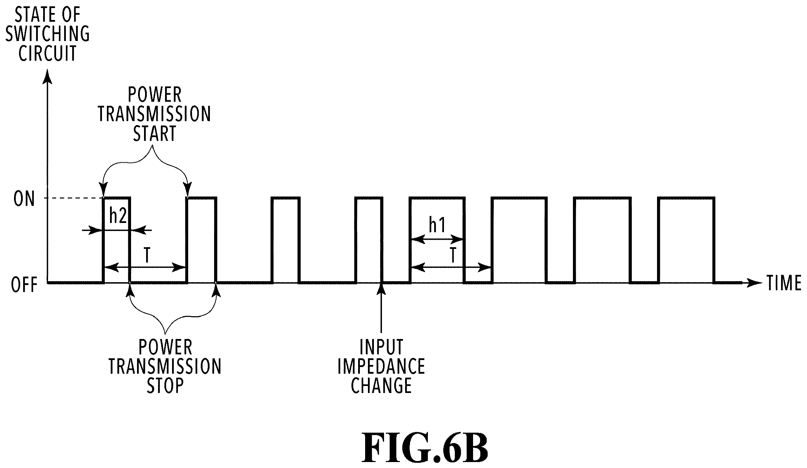

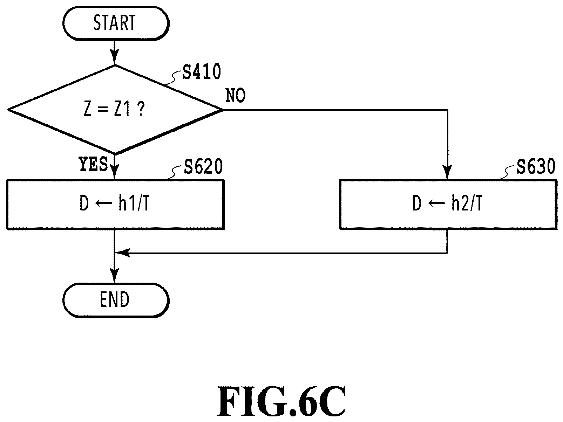

Figs. 6A, 6B, and 6C are diagrams describing an example of the processing of adjusting the input impedance Z of the output unit 120 of the vibration-driven energy harvesting device 100 that is performed by the adjustment unit 130 of the vibration-driven energy harvesting device 100 in the modification (4). This input impedance adjustment processing is performed by the adjustment unit 130 of the vibration-driven energy harvesting device 100 in the present modification. As described above, the adjustment unit 130 includes the control circuit that controls the switching operation of the switching circuit 122. As illustrated in Fig. 6A, in accordance with the control by the adjustment unit 130, the switching circuit 122 periodically repeats in chronological order the switching operation of changing from the off state to the on state and the switching operation of changing from the on state to the off state by a cycle T. In a case where the switching circuit 122 is changed to the on state, the power transmission from the first power storage circuit 121 to the second power storage circuit 123 is started, and in a case where the switching circuit 122 is changed from the off state, the power transmission from the first power storage circuit 121 to the second power storage circuit 123 is stopped.

In Fig. 6A, at first, power transmission time from start to stop of the power transmission is first time h1 in the cycle T, and thus a duty ratio D based on the cycle T and the first time h1 is obtained by an expression (3). This duty ratio D is calculated by the adjustment unit 130.

$$D = h1/T \,...(3)$$

Next, in Fig. 6A, in a case where the adjustment unit 130 of the vibration-driven energy harvesting device 100 changes the input impedance Z, in a time period thereafter, the power transmission time from start to stop of the power transmission in the cycle T is second time h2 smaller than the first time h1, and thus the duty ratio D based on the cycle T and the second time h2 is obtained from an expression (4).

$$D = h2/T \,...(4)$$

In other words, the adjustment unit 130 changes the conditions for the switching circuit 122 to perform the switching operation of the power transmission by changing the duty ratio D based on the power transmission time from start to stop of the power transmission from the first power storage circuit 121 to the second power storage circuit 123 and power stop time from stop to start of the power transmission. As illustrated in Fig. 6A, the input impedance Z of the output unit 120 is changed from the first impedance value Z1 to the second impedance value Z2 greater than the first impedance value Z1 by changing the duty ratio D from h1/T based on the expression (3) to value h2/T based on the expression (4) that is smaller than h1/T.

As illustrated in Fig. 6B, the input impedance Z of the output unit 120 is changed from the second impedance value Z2 to the first impedance value Z1 smaller than the second impedance value Z2 by changing the duty ratio D from the value h2/T based on the expression (4) described above to the value h1/T based on the expression (3) that is greater than the value h2/T.

The adjustment unit 130 changes the conditions for the switching circuit 122 to perform the switching operation of the power transmission depending on whether the vibration acceleration A in the vibration generation device 300 is greater than the predetermined threshold Ath. In the present modification, the adjustment unit 130 changes the conditions for the switching circuit 122 to perform the switching operation of the power transmission by changing the above-described duty ratio D and adjusts the input impedance Z of the output unit 120 by changing the conditions. Fig. 6C is a diagram illustrating the adjustment processing of the input impedance Z by the adjustment unit 130.

The adjustment processing of the input impedance Z by the adjustment unit 130 illustrated in Fig. 6C is, for example, repeatedly executed while the vibration-driven energy harvesting device 100 supplies the power to the load resistor 200. The adjustment processing of the input impedance Z illustrated in Fig. 6C is in common with Fig. 4C in the processing of step S410 but is different in performing processing of steps S620 and S630 thereafter, instead of the processing of steps S420 and S430, respectively. In step S410, the adjustment unit 130 determines whether to adjust the input impedance Z of the output unit 120 to the first impedance value Z1. If affirmative determination is obtained, the processing proceeds to step S620, and if denial determination is obtained, the processing proceeds to step S630.

In step S620, the adjustment unit 130 sets the value h1/T obtained by using the expression (3) as the duty ratio D. In a case of the duty ratio D = h1/T, the input impedance Z of the output unit 120 is the first impedance value Z1. Once step S620 is completed, the adjustment processing of the input impedance Z of the output unit 120 ends.

In step S630, the adjustment unit 130 sets the value h2/T obtained by using the expression (4) as the duty ratio D. In a case of the duty ratio D = h2/T, the input impedance Z of the output unit 120 is the second impedance value Z2. Once step S630 is completed, the adjustment processing of the input impedance Z of the output unit 120 ends.

In the vibration-driven energy harvesting device 100 in the present modification, the control circuit included in the adjustment unit 130 can change the conditions for the switching circuit 122 to perform the switching operation of the power transmission by changing the duty ratio D based on the power transmission time from start to stop of the power transmission and the power stop time from stop to start of the power transmission that is obtained by repeatedly performing the switching operation of the power transmission by the switching circuit 122. In this case, there is obtained an effect that the control circuit easily controls the switching operation of the power transmission by the switching circuit 122. Additionally, since measurement of the voltage V of the direct-current power stored in the first power storage circuit 121 is unnecessary, there is obtained an effect that it is possible to prevent a current lose along with the measurement.

Unless impairing the characteristic function of the present invention, the present invention is not limited to the configurations of the above-described embodiment and modifications.

Reference Signs List

100 vibration-driven energy harvesting device
110 vibration-driven energy harvesting element
115 acceleration sensor
120 output unit
121 first power storage circuit
122 switching circuit
123 second power storage circuit
130 adjustment unit
200 load resistor
300 vibration generation device

**Claims**

1. A vibration-driven energy harvesting device(100), comprising:

   a vibration-driven energy harvesting element(110) that generates power in accordance with vibration of an electrode;
   an output unit(120) that supplies the power generated by the vibration-driven energy harvesting element(110) to a load resistor(200) once being connected to the load resistor(200); and
   an adjustment unit(130) that adjusts an input impedance of the output unit(120) in accordance with a signal corresponding to an acceleration in the vibration,
   wherein
   the adjustment unit(130) selects, based on a relationship between the acceleration corresponding to the signal and the generated power for each of at least two input impedances, the input impedance in accordance with a range of the acceleration such that the generated power is greater,
   and the signal represents a detection value related to the acceleration that is detected by an acceleration sensor (115),
   **characterized in that**:

   in a case where the acceleration is changed from a first acceleration value smaller than a predetermined threshold to a second acceleration value greater than the predetermined threshold, the adjustment unit(130) changes the input impedance from a first impedance value to a second impedance value greater than the first impedance value, and
   in a case where the acceleration is changed from the second acceleration value to the first acceleration value, the adjustment unit(130) changes the input impedance from the second impedance value to the first impedance value, the predetermined threshold being determined by the adjustment unit(130).

2. The vibration-driven energy harvesting device(100) according to claim 1, wherein
   the acceleration sensor(115) is placed on the vibration-driven energy harvesting element(110).

3. The vibration-driven energy harvesting device(100) according to claim 1 or 2, wherein
   if the power in a case where the acceleration is a third acceleration value while the input impedance is the first impedance value is equal to the power in a case where the acceleration is the third acceleration value while the input impedance is the second impedance value, the predetermined threshold is obtained based on the third acceleration value.

4. The vibration-driven energy harvesting device(100) according to claim 1, wherein

   the signal represents an output level of a vibration generation device(300) that generates the vibration in accordance with the acceleration in the electrode, and
   in a case where the output level is changed from a first level to a second level greater than the first level, the adjustment unit(130) changes the input impedance from a first impedance value to a second impedance value greater than the first impedance value, and
   in a case where the output level is changed from the second level to the first level, the adjustment unit(130) changes the input impedance from the second impedance value to the first impedance value.

5. The vibration-driven energy harvesting device(100) according to any one of claims 1 to 4, wherein

   the output unit(120) includes
   a first power storage circuit(121) that converts alternating-current power outputted from the vibration-driven energy harvesting element(110) into direct-current power to store,
   a second power storage circuit(123) that converts a voltage of the direct-current power to store, and
   a switching circuit(122) that performs a switching operation to start or stop power transmission from the first power storage circuit(121) to the second power storage circuit(123), and
   the adjustment unit(130) adjusts the input impedance by changing conditions for performing the switching operation.

6. The vibration-driven energy harvesting device(100) according to claim 5, wherein

   the switching operation is performed by the switching circuit(122) in a case where the voltage of the direct-current power stored in the first power storage circuit rises(121) to a voltage value greater than a predetermined voltage value or decreases to a voltage value smaller than the predetermined voltage value, and
   the adjustment unit(130) changes the conditions for performing the switching operation by changing the predetermined voltage value.

7. The vibration-driven energy harvesting device(100) according to claim 5, wherein

the adjustment unit(130) changes the conditions for performing the switching operation by changing a duty ratio based on time from start to stop of the power transmission and time from stop to start of the power transmission that is obtained by repeatedly performing the switching operation.

**Patentansprüche**

1. Eine schwingungsgetriebene Energiegewinnungsvorrichtung (100), umfassend:

   ein schwingungsgetriebenes Energiegewinnungselement (110), das gemäß Schwingungen einer Elektrode Leistung erzeugt;
   eine Ausgabeeinheit (120), die die von dem schwingungsgetriebenen Energiegewinnungselement (110) erzeugte Leistung an einen Lastwiderstand (200) zuführt, sobald sie mit dem Lastwiderstand (200) verbunden ist; und
   eine Einstelleinheit (130), die eine Eingangsimpedanz der Ausgangseinheit (120) gemäß einem Signal einstellt, das einer Beschleunigung der Vibration entspricht,
   wobei
   die Einstelleinheit (130) basierend auf einer Beziehung zwischen der Beschleunigung, die dem Signal entspricht, und der erzeugten Leistung für jede von mindestens zwei Eingangsimpedanzen die Eingangsimpedanz gemäß einem Bereich der Beschleunigung auswählt, sodass die erzeugte Leistung größer ist,
   und das Signal einen Erfassungswert darstellt, der sich auf die Beschleunigung bezieht, die von einem Beschleunigungssensor (115) erfasst wird,
   **dadurch gekennzeichnet, dass**:

      in einem Fall, in dem die Beschleunigung von einem ersten Beschleunigungswert, der kleiner ist als ein vorbestimmter Schwellenwert, zu einem zweiten Beschleunigungswert, der größer ist als der vorbestimmte Schwellenwert ist, geändert wird, die Einstelleinheit (130) die Eingangsimpedanz von einem ersten Impedanzwert auf einen zweiten Impedanzwert ändert, der größer ist als der erste Impedanzwert, und
      in einem Fall, in dem die Beschleunigung von dem zweiten Beschleunigungswert auf den ersten Beschleunigungswert geändert wird, die Einstelleinheit (130) die Eingangsimpedanz von dem zweiten Impedanzwert auf den ersten Impedanzwert ändert, wobei der vorbestimmte Schwellenwert von der Einstelleinheit (130) bestimmt wird.

2. Schwingungsgetriebene Energiegewinnungsvorrichtung (100) nach Anspruch 1, wobei der Beschleunigungssensor (115) an dem schwingungsgetriebenen Energiegewinnungselement (110) platziert ist.

3. Schwingungsgetriebene Energiegewinnungsvorrichtung (100) nach Anspruch 1 oder 2, wobei wenn die Leistung in einem Fall, in dem die Beschleunigung ein dritter Beschleunigungswert ist, während die Eingangsimpedanz der erste Impedanzwert ist, gleich wie die Leistung in einem Fall ist, in dem die Beschleunigung der dritte Beschleunigungswert ist, während die Eingangsimpedanz der zweite Impedanzwert ist, der vorbestimmte Schwellenwert basierend auf dem dritten Beschleunigungswert erlangt wird.

4. Schwingungsgetriebene Energiegewinnungsvorrichtung (100) nach Anspruch 1, wobei

   das Signal einen Ausgangspegel einer Schwingungserzeugungsvorrichtung (300) darstellt, die die Schwingung gemäß der Beschleunigung in der Elektrode erzeugt, und
   in einem Fall, in dem der Ausgangspegel von einem ersten Pegel auf einen zweiten Pegel geändert wird, der größer ist als der erste Pegel die Einstelleinheit (130) die Eingangsimpedanz von einem ersten Impedanzwert auf einen zweiten Impedanzwert ändert, der größer ist als der erste Impedanzwert, und
   in einem Fall, in dem der Ausgangspegel von dem zweiten Pegel auf den ersten Pegel geändert wird, die Einstelleinheit (130) die Eingangsimpedanz von dem zweiten Impedanzwert auf den ersten Impedanzwert ändert.

5. Schwingungsgetriebene Energiegewinnungsvorrichtung (100) nach einem der Ansprüche 1 bis 4, wobei

   die Ausgabeeinheit (120) Folgendes beinhaltet eine erste Leistungsspeicherschaltung (121), die Wechselstromleistung, die von dem schwingungsgetriebenen Energiegewinnungselement (110) ausgegeben wird, in zu speichernde Gleichstromleistung umwandelt,
   eine zweite Leistungsspeicherschaltung (123), die eine Spannung der zu speichernden Gleichstromleistung umwandelt, und
   einen Schaltkreis (122), der einen Schaltvorgang durchführt, um eine Leistungsübertragung von der ersten Leistungsspeicherschaltung (121) zu der zweiten Leistungsspeicherschaltung (123) zu starten oder zu stoppen, und
   die Einstelleinheit (130) die Eingangsimpedanz durch Ändern von Bedingungen zum Durchführen des Schaltvorgangs einstellt.

6. Schwingungsgetriebene Energiegewinnungsvorrichtung (100) nach Anspruch 5, wobei

der Schaltvorgang durch den Schaltkreis (122) in einem Fall durchgeführt wird, in dem die Spannung der in der ersten Leistungsspeicherschaltung (121) gespeicherten Gleichstromleistung auf einen Spannungswert größer als ein vorbestimmter Spannungswert ansteigt oder auf einen Spannungswert kleiner als der vorbestimmte Spannungswert abfällt, und die Einstelleinheit (130) die Bedingungen zum Durchführen des Schaltvorgangs ändert, indem sie den vorbestimmten Spannungswert ändert.

7. Schwingungsgetriebene Energiegewinnungsvorrichtung (100) nach Anspruch 5, wobei die Einstelleinheit (130) die Bedingungen zum Durchführen des Schaltvorgangs ändert, indem sie ein Tastverhältnis ändert, das auf der Zeit von Start bis Stopp der Leistungsübertragung und der Zeit von Stopp bis Start der Leistungsübertragung basiert, die durch wiederholtes Durchführen des Schaltvorgangs erlangt wird.

**Revendications**

1. Élément de récupération d'énergie entraîné par vibrations (100) comprenant :

un élément de récupération d'énergie entraîné par vibrations (110) qui génère une puissance selon les vibrations d'une électrode ; une unité de sortie (120) qui fournit la puissance générée par l'élément de récupération d'énergie entraîné par vibrations (110) à une résistance de charge (200) une fois qu'elle est connectée à la résistance de charge (200) ; et une unité de réglage (130) qui règle une impédance d'entrée de l'unité de sortie (120) selon un signal qui correspond à une accélération des vibrations, dans lequel l'unité de réglage (130) sélectionne, sur la base d'une relation entre l'accélération qui correspond au signal et la puissance générée pour chacune d'au moins deux impédances d'entrée, l'impédance d'entrée selon une étendue de l'accélération de sorte que la puissance générée soit plus élevée, et le signal représente une valeur de détection liée à l'accélération qui est détectée par un capteur d'accélération (115), **caractérisé en ce que** :

lorsque l'accélération passe d'une première valeur d'accélération inférieure à un seuil prédéterminé à une deuxième valeur d'accélération supérieure au seuil prédéterminé, l'unité de réglage (130) fait passer l'impédance d'entrée d'une première valeur d'impédance à une deuxième valeur d'impédance supérieure à la première valeur d'impédance, et lorsque l'accélération passe de la deuxième valeur d'accélération à la première valeur d'accélération, l'unité de réglage (130) fait passer l'impédance d'entrée de la deuxième valeur d'impédance à la première valeur d'impédance, le seuil prédéterminé étant déterminé par l'unité de réglage (130).

2. Élément de récupération d'énergie entraîné par vibrations (100) selon la revendication 1, dans lequel le capteur d'accélération (115) est placé sur l'élément de récupération d'énergie entraîné par vibrations (110).

3. Élément de récupération d'énergie entraîné par vibrations (100) selon la revendication 1 ou 2, dans lequel si la puissance lorsque l'accélération est une troisième valeur d'accélération alors que l'impédance d'entrée est la première valeur d'impédance est égale à la puissance lorsque l'accélération est la troisième valeur d'accélération alors que l'impédance d'entrée est la deuxième valeur d'impédance, le seuil prédéterminé est obtenu sur la base de la troisième valeur d'accélération.

4. Élément de récupération d'énergie entraîné par vibrations (100) selon la revendication 1, dans lequel

le signal représente un niveau de sortie d'un dispositif de génération de vibrations (300) qui génère les vibrations selon l'accélération dans l'électrode, et lorsque le niveau de sortie passe d'un premier niveau à un deuxième niveau supérieur au premier niveau, l'unité de réglage (130) fait passer l'impédance d'entrée d'une première valeur d'impédance à une deuxième valeur d'impédance supérieure à la première valeur d'impédance, et lorsque le niveau de sortie passe du deuxième niveau au premier niveau, l'unité de réglage (130) fait passer l'impédance d'entrée de la deuxième valeur d'impédance à la première valeur d'impédance.

5. Élément de récupération d'énergie entraîné par vibrations (100) selon l'une quelconque des revendications 1 à 4, dans lequel

l'unité de sortie (120) comporte

un premier circuit de stockage de puissance (121) qui convertit la puissance à courant alternatif délivrée par l'élément de récupération d'énergie entraîné par vibrations (110) en une puissance à courant continu à stocker,

un deuxième circuit de stockage de puissance (123) qui convertit une tension de la puissance à courant continu à stocker, et

un circuit de commutation (122) qui effectue une opération de commutation afin de démarrer ou d'arrêter la transmission de puissance du premier circuit de stockage de puissance (121) vers le deuxième circuit de stockage de puissance (123), et

l'unité de réglage (130) règle l'impédance d'entrée en changeant les conditions d'exécution de l'opération de commutation.

6. Élément de récupération d'énergie entraîné par vibrations (100) selon la revendication 5, dans lequel

l'opération de commutation est effectuée par le circuit de commutation (122) lorsque la tension de la puissance à courant continu stockée dans le premier circuit de stockage de puissance augmente (121) jusqu'à une valeur de tension supérieure à une valeur de tension prédéterminée ou diminue jusqu'à une valeur de tension inférieure à la valeur de tension prédéterminée, et

l'unité de réglage (130) change les conditions d'exécution de l'opération de commutation en changeant la valeur de tension prédéterminée.

7. Élément de récupération d'énergie entraîné par vibrations (100) selon la revendication 5, dans lequel l'unité de réglage (130) change les conditions d'exécution de l'opération de commutation en changeant un facteur de marche sur la base de la durée entre le démarrage et l'arrêt de la transmission de puissance et de la durée entre l'arrêt et le démarrage de la transmission de puissance qui est obtenue en effectuant de manière répétée l'opération de commutation.

**FIG.1**

**FIG.2**

**FIG.3**

# FIG.4A

STATE OF
SWITCHING
CIRCUIT

POWER
TRANSMISSION
STOP

ON

OFF

TIME

$V \geq Vth$

$V < Vth$

# FIG.4B

START

S410

Z = Z1 ?    NO

YES    S420

Vth ← V1

S430

Vth ← V2

END

# FIG.4C

**FIG.5**

EP 4 243 258 B1

STATE OF
SWITCHING
CIRCUIT

ON

OFF

POWER
TRANSMISSION
STOP

POWER
TRANSMISSION
START

h1
T

h2
T

INPUT
IMPEDANCE
CHANGE

TIME

**FIG.6A**

**FIG.6B**

START

S410

Z = Z1 ? → NO

YES

D ← h1/T  S620

D ← h2/T  S630

END

# FIG.6C

**EP 4 243 258 B1**

**Patent documents cited in the description**

- JP 2019213296 A

- WO 2016096492 A1